# EUROPÄISCHE PATENTANMELDUNG

(11) **EP 1 124 125 A2**
(43) Veröffentlichungstag der Anmeldung: **16.08.2001**
(21) Anmeldenummer: 01100393.6
(22) Anmeldetag: 05.01.2001
(51) Int. Cl.: G01N 15/02

(54) **Verfahren und Vorrichtung zur akustischen Erfassung von Mikropartikeln**

(30) Priorität: 10.01.2000 DE 10000608
(71) Anmelder: Max-Planck-Gesellschaft zur Förderung der Wissenschaften e.V., 80539 München (DE)
(72) Erfinder: Müller, Martin, 12526 Berlin (DE); Kalkum, Markus, Dr., 53123 Bonn (DE); Germer, Rudolf, Prof. Dr., 12249 Berlin (DE); Eickhoff, Holger, Dr., 14195 Berlin (DE)
(74) Vertreter: Hertz, Oliver, Dr.

(57) **Zusammenfassung**

Ein Verfahren zur Erfassung von Mikropartikeln, die von mindestens einem Dispenser abgegeben werden, umfaßt die Schritte (a) Auslösen des Dispensers über einem Schwingungstarget (20) mit einem Sensormaterial (21), so daß mindestens ein Mikropartikel auf dem Sensormaterial (21) auftrifft und eine akustische Welle anregt, (b) Erfassen der akustischen Welle mit mindestens einem mit dem Sensormaterial (21) verbundenen Schwingungssensor (31), der beim Eintreffen der akustischen Welle ein elektrisches Sensorsignal abgibt, und (c) Auswerten des Sensorsignals, um das Auftreffen des Mikropartikels zu erfassen. Das Verfahren ist auf die Erfassung des Auftreffens und/oder der Auftreffpositionen von Mikropartikeln auf einem Target gerichtet. Es wird auch eine Detektorvorrichtung zur Durchführung des Verfahrens beschrieben.

## Beschreibung

Die Erfindung betrifft ein Verfahren zur akustischen Erfassung von Mikropartikeln, insbesondere zur Erfassung des Auftretens und/oder der Positionen dispensierter Mikropartikel, bzw. zur Erfassung der Ausrichtungen von Dispensern eines Mikropartikel-Dispensierkopfes, insbesondere zur Dispensierkopfkalibrierung. Die Erfindung betrifft auch eine Vorrichtung zur Durchführung derartiger Verfahren, insbesondere eine Detektorvorrichtung zur Erfassung des Auftreffens und/oder der Auftreffpositionen von Mikropartikeln, die von einem Dispensierkopf abgegeben worden sind.

Es ist allgemein bekannt, kleinste Festsubstanz- und/oder Flüssigkeitsmengen in Form von Tropfen oder festen Partikeln (im folgenden allgemein als Mikropartikel bezeichnet) mit einem Mikrodispensiergerät auf einem Substrat zu plazieren. Mit dem Mikrodispensiergerät werden definierte Volumina an vorbestimmten Positionen auf dem Substrat aufgebracht. Ein Mikrodispensiergerät besitzt ggf. einen Dispensierkopf mit mehreren Dispensern, beispielsweise um verschiedene Substanzen auf dem Substrat zu positionieren.

Die von einem Dispenser abgegebenen Mikropartikel sind in der Regel so klein, daß die Funktion eines Dispensers visuell weder qualitativ noch quantitativ überprüft werden kann. Funktionsausfälle sind jedoch äußerst nachteilig, da beispielsweise bei Anwendungen in der Biotechnologie und Gentechnik Proben bzw. Reaktionspartner auf Substraten ggf. unbemerkt nicht in der gewünschten Weise zur Wechselwirkung gebracht werden. Es besteht daher ein Interesse an einem zuverlässigen Meßsystem, mit dem die von Dispensern abgegebenen Mikropartikel registriert werden können.

Für die genannten Anwendungen in der Biotechnologie und Gentechnik besteht ferner ein Interesse an der Plazierung der Proben oder Reaktionspartner auf Substraten mit einer extrem hohen Flächendichte. Dies erfordert neben einer hohen Genauigkeit und Reproduzierbarkeit der Positionierung des Dispensierkopfes auch die Kenntnis der Auftreffpunkte der dispensierten Mikropartikel auf dem Substrat. Erfahrungsgemäß stimmen die Relativpositionen der Auftreffpunkte nicht mit den Relativpositionen der Dispenser am Dispensierkopf überein. Dieses Problem und verschiedene Techniken zu dessen Lösung sind in PCT/EP98/07558 beschrieben.

Nach früheren optischen Dispensierkopfkalibrierungen unter Verwendung stroboskopischer Verfahren wurde mit der Technik, die der Patentanmeldung PCT/EP98/07558 zugrundeliegt, ein neues Kalibrierungsprinzip geschaffen. Dabei ist vorgesehen, einen Dispensierkopf mehrfach unter laufender Abgabe von Mikropartikeln über einem optischen oder elektroakustischen Wechselwirkungsbereich mit linearen Begrenzungen zu verfahren und das Auftreffen von dispensierten Mikropartikeln auf den Begrenzungen zu erfassen. Aus den Auftreffzeiten und den geometrischen Eigenschaften der linearen Begrenzungen werden die relativen Auftreffpositionen der einzelnen Dispenser ermittelt. Diese Kalibrierungstechnik besitzt zwar den Vorteil einer vollständigen Automatisierbarkeit, hohen Geschwindigkeit und Zuverlässigkeit. Sie hat aber den Nachteil, daß der Dispensierkopf mehrfach verfahren bzw. das zugehörige Achsensystem mehrfach betätigt werden muß. Dies schränkt neben der Genauigkeit vor allem die Geschwindigkeit der Kalibrierung ein.

Es besteht ein Interesse an einer Erhöhung der Flächendichte der auf einem Substrat abgelegten Proben. Dies stellt erhöhte Anforderungen insbesondere an die Genauigkeit der Dispensierkopfkalibrierung.

Die Aufgabe der Erfindung ist es, ein verbessertes Verfahren zur Mikropartikelerfassung anzugeben, mit dem dispensierte Mikropartikel mit erhöhter Geschwindigkeit und Genauigkeit registriert und/oder lokalisiert werden können, und das insbesondere eine Funktionsprüfung und/oder Kalibrierung von Dispensierköpfen mit erhöhter Genauigkeit und Reproduzierbarkeit ermöglicht. Die Aufgabe der Erfindung ist es auch, eine Detektorvorrichtung zur Durchführung der genannten Verfahren anzugeben.

Diese Aufgaben werden durch ein Verfahren bzw. eine Detektorvorrichtung mit den Merkmalen gemäß den Patentansprüchen 1 bzw. 11 gelöst. Vorteilhafte Ausführungsformen und Anwendungen der Erfindung ergeben sich aus den abhängigen Ansprüchen.

Die Erfindung basiert auf der Idee, das Auftreffen eines dispensierten Mikropartikels auf einem Sensortarget akustisch zu detektieren, indem der auftreffende Mikropartikel auf einem Sensormaterial (z. B. Sensorfolie) des Sensortargets eine akustische Welle anregt, die mit mindestens einem Schallwandler erfaßt wird. Das elektrische Schallwandlersignal wird je nach Anwendung lediglich in Bezug auf die Registrierung (Detektion) des Mikropartikels oder auch zu dessen Lokalisierung ausgewertet.

Zur Lokalisierung des Mikropartikels ist vorgesehen, den Auftreffpunkt (die Auftreffposition) mindestens eines dispensierten Mikropartikels, der von mindestens einem Dispenser abgegeben worden ist, aus den Unterschieden in den Laufzeiten zu ermitteln, die eine durch den Mikropartikel auf dem Sensormaterial (z. B. aufgespannte Sensorfolie) angeregte akustische Welle von der Auftreffposition entlang von mindestens drei verschiedenen vorbestimmten Laufstrecken zu mindestens einem Schwingungssensor (Schallwandler) benötigt.

Gemäß einer ersten Ausführungsform der Erfindung, die nur auf die Registrierung eines dispensierten Mikropartikels gerichtet ist, wird die akustische Welle mit mindestens einem mit dem Sensormaterial verbundenen Schwingungssensor erfaßt, dessen elektrisches Sensorsignal ausgewertet wird, um das Auftreffen des Mikropartikels zu erfassen. Hierzu wird das Sensorsignal mit einem vorbestimmten Auftreffsignal verglichen.

Gemäß einer zweiten Ausführungsform der Erfindung, die auch auf die Lokalisierung eines dispensierten Mikropartikels gerichtet ist, werden die genannten drei Laufstrecken durch eine Kombination aus mindestens zwei Reflektorelementen und mindestens einem Schwingungssensor (oder mindestens einem Reflektorelement und mindestens zwei Schwingungssensoren) an dem Sensormaterial (der Sensorfolie) gebildet. Die Laufstrecken sind die geraden Strecken vom Auftreffpunkt direkt zum Schwingungssensor bzw. vom Auftreffpunkt über die Reflektorelemente zum Schwingungssensor. Gemäß einer dritten Ausführungsform sind zur Partikellokalisierung mindestens drei Schwingungssensoren an dem Sensormaterial vorgesehen. Mindestens drei gerade Laufstrecken werden durch die Strecken vom Auftreffpunkt jeweils direkt zu einem Schwingungssensor gebildet. Die dritte Ausführungsform wird aus Gründen eines vereinfachten Aufbaus und einer vereinfachten Signalauswertung bevorzugt.

Die Ermittlung der Auftreffpositionen aus den Laufzeitunterschieden erfolgt als Absolutberechnung unter Berücksichtigung der bekannten Längen der Laufstrecken und Geschwindigkeiten der akustischen Wellen oder als Relativbestimmung durch Vergleich der mit verschiedenen Dispensern ermittelten Laufzeitunterschiede. Erfindungsgemäß ist insbesondere vorgesehen, die relativen Auftreffpositionen von dispensierten Mikropartikeln aus verschiedenen Dispensern eines Dispensierkopfes dadurch zu ermitteln, daß für einen Referenzdispenser des Dispensierkopfes Referenz-Laufzeitunterschiede ermittelt und für alle anderen Dispenser des Dispensierkopfes die gemessenen Laufzeitunterschiede mit den Referenz-Laufzeitunterschieden in Beziehung gesetzt und daraus direkt die relativen Auftreffpositionen ermittelt werden.

Die Laufzeitunterschiede werden vorzugsweise durch eine einfache Zähltechnik gemessen, indem z. B. einer der Schwingungssensoren, an dem die Oberflächenwelle zuerst detektiert wird, ein Startsignal an einen Zähler gibt und die übrigen Schwingungssensoren bei Detektion der Oberflächenwelle jeweils ein Lesesignal an den Zähler geben. Die Unterschiede der Zählerstände jeweils entsprechend den Start- und Lesesignalen werden ermittelt und daraus die Laufzeitunterschiede bestimmt. Die Auftreffpositionen können direkt aus den Zählerstandsdifferenzen abgeleitet werden. Wenn als Zähler ein Hochfrequenz-Zählerbaustein (Zählfrequenz im MHz-Bereich) verwendet wird, können Auftreffpositionen mit µm-Genauigkeit ermittelt werden.

Je nach der Größe des Schwingungstargets mit dem Sensormaterial (der Sensorfolie) können die nach Auftreffen eines Mikropartikels gelieferten Schallsignale für alle Dispenser eines Dispensierkopfes gleichzeitig oder für die einzelnen Dispenser aufeinanderfolgend (jeweils abwechselnd mit einer Verstellbewegung des Dispensierkopfes) erfaßt werden.

Eine erfindungsgemäße Detektorvorrichtung weist insbesondere ein Schwingungstarget mit einem Sensormaterial (insbesondere mit einer aufgespannten Sensorfolie) auf, mit dem je nach Ausführungsform ggf. Reflektorelemente und mindestens ein Schwingungssensor verbunden sind. Die Schwingungssensoren, die vorzugsweise durch Kondensatormikrophone mit Schwingungskopplern gebildet werden, bzw. die Reflektorelemente sind mit Abstand voneinander positioniert.

Gemäß einer weiteren bevorzugten Ausführungsform der Erfindung ist die Sensorfolie aus einem piezoelektrischen Material hergestellt (piezoelektrische Folie). Die Schwingungssensoren werden durch metallische Beschichtungen gebildet, die an vorbestimmten Bereichen auf der Folie aufgebracht sind. Die metallischen Beschichtungen auf dem piezoelektrischen Material erfüllen die Funktion der o. g. Mikrophone.

Die Erfindung besitzt die folgenden Vorteile. Mit der erfindungsgemäßen Mikropartikelerfassung wird eine unmittelbare Überwachung und Validierung der Dispenserfunktion z. B. bei der Herstellung mikrodispensierter Substanzraster bereitgestellt. Es wird auch eine robuste, schnelle, hochgenaue und einfach automatisierbare Dispensierkopfkalibrierung ermöglicht. Der zu kalibrierende Dispensierkopf muß nicht mehrfach entsprechend einer bestimmten Bahn über das Schwingungstarget gefahren werden. Es genügt eine beliebige, reproduzierbare Einstellung des Dispensierkopfes relativ zur Sensorfolie. Während des laufenden Dispensiervorgangs muß der Dispensierkopf nicht verfahren werden. Die Relativpositionen der Auftreffpunkte von dispensierten Mikropartikeln können mit einer Genauigkeit von rd. 10 µm (oder darunter bis in den 100 nm-Bereich) ermittelt werden. Die akustische Partikelerfassung erfolgt mit einer minimalen Auswertungszeit.

Weitere Vorteile und Einzelheiten der Erfindung werden aus der Beschreibung der beigefügten Zeichnungen ersichtlich. Es zeigen:
- Fig. 1: eine schematische Perspektivansicht einer ersten Ausführungsform der erfindungsgemäßen Detektorvorrichtung,
- Fig. 2: eine schematische Perspektivansicht einer weiteren Ausführungsform der erfindungsgemäßen Detektorvorrichtung,
- Fig. 3: eine schematische Perspektivansicht der Detektorvorrichtung gemäß Fig. 2 mit abgenommenem Schwingungstarget,
- Fig. 4: eine schematische Schnittansicht der Detektorvorrichtung gemäß Fig. 2,
- Fign. 5, 6: schematische Illustrationen der erfindungsgemäßen Laufzeitmessung,
- Fig. 7: eine Blockdarstellung einer Auswertungsschaltung zur erfindungsgemäßen Partikelregistrierung, und
- Fig. 8: eine Blockdarstellung einer Auswertungsschaltung zur erfindungsgemäßen Partikellokalisierung.

Die Erfindung wird im Folgenden in Bezug auf den Aufbau einer Detektorvorrichtung zur Mikropartikelerfassung und Verfahrensweisen zu deren Verwendung beschrieben. Auf die Bauform der verwendeten Dispenser und die Art der dispensierten Mikropartikel wird im Einzelnen nicht eingegangen. Die Erfindung ist mit allen an sich bekannten Dispensertypen, insbesondere mit einzelnen Dispensern oder mit Dispensierköpfen mit einer reihenweisen oder matrixartigen Anordnung einer Vielzahl von Dispensern, anwendbar. Die Dispenser können beliebige Arten von Einrichtungen zur vertikalen, horizontalen oder beliebig geneigten Abgabe von Mikropartikeln sein, wie z. B. piezoelektrisch, elektromechanisch oder hydrodynamisch betätigte Mikropipetten oder auch Mikrotropfenschusseinrichtungen, die nach Art von Tintenstrahldruckern arbeiten. Typische Volumen der dispensierten Mikropartikel liegen bspw. bei rd. 100 pl. Des Weiteren werden auch die an sich bekannten Antriebs- und Steuereinrichtungen für den oder die Dispenser im Einzelnen nicht beschrieben. Typischerweise wird ein Dispenser oder ein Dispensierkopf mit einem x-y-z-Stellantrieb verfahren, der ggf. mit der Signalauswertungsschaltung der erfindungsgemäßen Detektorvorrichtung (siehe unten) verbunden ist.

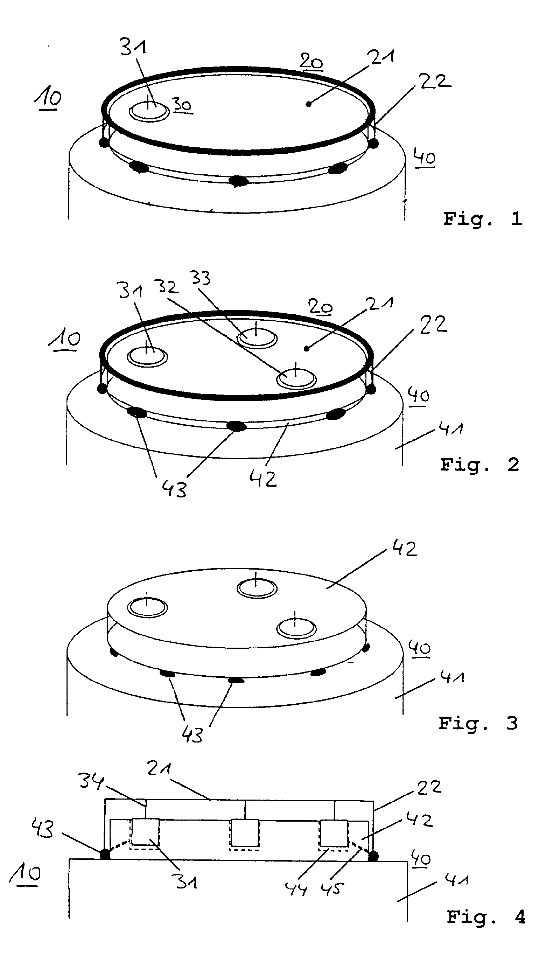

Die oben genannte erste Ausführungsform (Partikelregistrierung) der erfindungsgemäßen Detektorvorrichtung 10 ist schematisch in Figur 1 gezeigt. Sie umfaßt ein Schwingungstarget 20 mit einem flächigen Sensormaterial 21, eine Schallwandleranordnung 30 und einen Träger 40. Das flächige Sensormaterial wird durch eine aufgespannte Sensorfolie gebildet. Die Verwendung der Sensorfolie ist kein zwingendes Merkmal der Erfindung. Ersatzweise kann auch ein anderes Schicht- oder Volumenmaterial vorgesehen sein, das eine freie Oberfläche als Target für die Mikropartikel bildet. Die freie Oberfläche ist vorzugsweise größer als die typische Lateralausdehung der Dispenseranordnung am Dispensierkopf. Die Sensorfolie wird jedoch bei dieser und den unten beschriebenen Ausführungsformen wegen der relativ geringen Laufgeschwindigkeiten angeregter akustischer Wellen bevorzugt. Vorzugsweise besitzt die Sensorschicht (oder Sensorfolie) eine Dicke kleiner als 100 µm, vorzugsweise unterhalb 20 µm. Je kleiner die Schichtdicke ist, desto geringer ist die Schallgeschwindigkeit (Laufgeschwindigkeit der akustischen Wellen). Dementsprechend wachsen die Laufzeiten, wodurch eine Verbesserung der Sensorauflösung ermöglicht wird. Die Schallwandleranordnung 30 weist lediglich einen Sensor 31 auf.

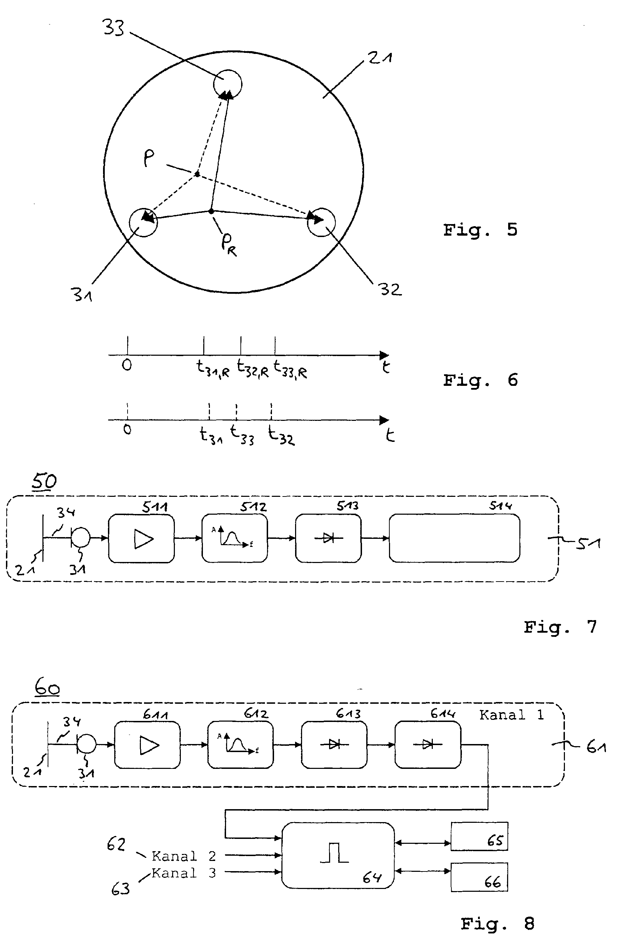

Die Ausführungsform gemäß Figur 1 dient der Partikelregistrierung. Ein auf die Oberfläche der Sensorfolie treffender Mikropartikel löst am Sensor 31 ein Sensorsignal auf, das mit einer unten unter Bezug auf Figur 7 erläuterten Auswertungsschaltung verarbeitet wird. Einzelheiten des Schwingungstargets 20, der Schallwandleranordnung 30 und des Trägers 40 sind wie bei der im folgenden erläuterten Ausführungsform aufgebaut.

Die oben genannte dritte Ausführungsform (Partikellokalisierung) der erfindungsgemäßen Detektorvorrichtung 10 ist schematisch in den Figuren 2 bis 4 gezeigt. Sie weist wiederum ein Schwingungstarget 20, eine Schallwandleranordnung 30 und einen Träger 40 auf. Die Detektorvorrichtung 10 wird auch als Trommelsensor bezeichnet, da das Schwingungstarget 20 mit dem Träger 40 nach Art einer Trommel mit einem aufgespannten Trommelfell aufgebaut ist. Auf die oben genannte zweite Ausführungsform wird weiter unten eingegangen.

Das Schwingungstarget 20 umfasst eine Sensorfolie 21, die wie ein Trommelfell auf einem Rahmen 22 aufgespannt ist. Die Sensorfolie 21 ist eine Thermofolie mit einer Dicke von z. B. 20 µm, die vorzugsweise durch Erhitzen mit einer bestimmten Spannkraft straff auf den Rahmen 22 aufgeschrumpft ist. Die Sensorfolie 21 besteht aus einem Polymerwerkstoff. Der Rahmen 22 besitzt die Form eines geraden Zylindermantels. Er besteht aus einem starren Kunststoffmaterial, z. B. aus PMMA, und besitzt eine Wandstärke von ca. 1 mm und eine Höhe von ca. 5 mm. Der Durchmesser des Rahmens beträgt bspw. 35 mm. Am oberen Ende des Rahmens 22, das die aufgespannnte Sensorfolie 21 trägt, kann (wie in den Figuren 1, 2 dargestellt) eine umlaufende Kragenfläche vorgesehen sein, um die Haftung der Sensorfolie 21 auf dem Rahmen 22 zu verbessern.

Die Schallwandleranordnung 30 umfasst beim dargestellten Beispiel drei Kondensatormikrophone 31, 32 und 33, die mit der Sensorfolie 21 schallschwingungsgekoppelt verbunden sind. Jedes Kondensatormikrophon (siehe z. B. Bezugszeichen 31 in Figur 4) trägt zur Schwingungskopplung mit der Sensorfolie 21 einen Koppelstift 34, der einerseits auf der schwingfähigen Membran des Kondensatormikrophons 31 befestigt ist und andererseits die Sensorfolie 21 berührt. Die Koppelstifte 34 werden bspw. durch starre oder elastisch deformierbare Drähte gebildet. Die Koppelstifte 34 sind kein zwingendes Merkmal der Erfindung. Es können andere Formen der Schallschwingungskopplung zwischen dem Sensormaterial 21 und den Sensoren 31 vorgesehen sein (siehe unten).

Der Träger 40, der in Figur 3 ohne das Schwingungstarget 20 gezeigt ist, umfasst einen Basisblock 41, einen Sensorhalter 42 und Abstandshalter 43. Der Basisblock 41 besteht bspw. aus einem kompakten PMMA-Zylinder, mit einer am oberen Ende vorgesehenen Verjüngung, die den Sensorhalter 42 bildet. Am unteren, nicht dargestellten Ende des Basisblocks 41 ist anwendungsabhängig bspw. eine Trägerplatte oder eine andere Komponente eines Labortisches oder eines Verstellgerätes vorgesehen. Beim dargestellten Beispiel besitzt der Basisblock 41 bspw. einen Durchmesser von ca. 45 mm. Der Sensorhalter 42 besitzt bspw. eine Höhe von 8 mm und einen Durchmesser von ca. 30 mm. Auf dem Rand, der durch den verjüngten Sensorhalter 42 am Ende des Basisblocks 41 gebildet ist, sind verstellbare Abstandshalter 43 vorgesehen. Die Abstandshalter 43 können wie dargestellt aus einer plastisch deformierbaren Kunststoffmasse (z. B. knetbare Silikonkügelchen) oder auch durch eine mechanische Höhenverstellung (nicht dargestellt) gebildet werden. Die mechanische Höhenverstellung kann bspw. durch eine Gruppe von verstellbaren Feingewinde-Trägerelementen oder auch durch zusammenwirkende Innen- bzw. Außengewinde am Rahmen 22 bzw. am Sensorhalter 42 gebildet werden. Die Abstandshalter dienen der Einstellung des Schwingungstargets 20 relativ zum Sensorhalter 42, insbesondere zur Positionierung der Sensorfolie 21 derart, dass diese von den Koppelstiften 34 der Mikrophone unter minimaler Kraftwirkung berührt wird.

Im Sensorhalter 42 sind für jedes Mikrophon 31, 32 bzw. 33 Ausnehmungen 44 vorgesehen, in denen jeweils ein Kondensatormikrophon zumindest teilweise versenkt, schwingungsgedämpft angeordnet ist. Zur Schwingungsdämpfung sind in den Ausnehmungen 44 bspw. Schaumstoffschichten (nicht dargestellt) vorgesehen. Von jeder Ausnehmung 44 führt ein Kanal 45 durch den Körper des Sensorhalters 42. Die Kanäle 45 nehmen die elektrischen Verbindungsleitungen der Schallwandler auf. Die Mikrophone sind so angeordnet, dass die Koppelstifte 34 vom Sensorhalter 42 hervorragen.

Zur Detektion dispensierter Mikropartikel wird die Detektorvorrichtung 10 in den Fahrbereich eines Dispensers oder Dispensierkopfes gebracht. Mindestens ein Dispenser wird so positioniert, dass ein dispensierter Mikropartikel auf die Sensorfolie 21 auftrifft. In Bezug auf den Auftreffpunkt gibt es keine Beschränkungen. Aus Gründen der Messgenauigkeit wird jedoch ein Auftreffpunkt innerhalb des durch die Mikrophone 31, bis 33 aufgespannten Dreiecks bevorzugt. Ein auf der Sensorfolie 21 auftreffender Mikropartikel (z. B. ein Mikrotropfen mit einem Volumen von rd. 100 pl entsprechend einer Masse von rd. 100 ng) regt beim Aufschlag auf der Sensorfolie eine akustische Oberflächenwelle an, die sich vom Auftreffpunkt ausgehend kreisförmig ausbreitet. Nach einer spannkraft- und materialspezifischen Laufzeit löst die Oberflächenwelle zuerst an einem dem Auftreffpunkt am nächsten gelegenen Mikrophon ein Signal aus. Bei den weiter entfernt gelegenen Mikrophonen erfolgt einen Signalauslösung nach entsprechend größeren Laufzeiten der Oberflächenwelle in der Sensorfolie 21. Die Signalauslösung wird dadurch verursacht, dass sich die Oberflächenwelle über die Koppelstifte 34 auf die Mikrophonmembranen überträgt, so dass jeweils ein elektrisches Mikrophonsignal gebildet wird. Die Weiterverarbeitung der elektrischen Mikrophonsignale wird unten unter Bezug auf Figur 6 erläutert.

Obwohl mit der erfindungsgemäßen Detektorvorrichtung auch eine Absolutbestimmung der Auftreffpositionen dispensierter Mikropartikel möglich ist, wird vorzugsweise eine Relativbestimmung realisiert, die im Folgenden unter Bezug auf die Figuren 5 und 6 erläutert wird.

Figur 5 zeigt die Sensorfolien 21 mit den Kondensatormikrophonen 31 bis 33 in schematischer Draufsicht. Zur Bestimmung der Auftreffposition eines von einem bestimmten Dispenser eines Dispensierkopfes abgegebenen Mikropartikels wird zunächst ein Referenzdispenser über die Detektorvorrichtung gefahren. Der Dispensierkopf befindet sich dabei in einer bestimmten Referenzposition, die mit dem Steuerantrieb des Dispensierkopfes reproduzierbar einstellbar ist. Der vom Referenzdispenser abgegebene Mikropartikel trifft bspw. bei P_{R} auf der Sensorfolie 21 auf. Die von P_{R} ausgehende Oberflächenwelle erreicht zuerst das Mikrophon 31 und anschließend die Mikrophone 32 und 33. Die zeitliche Entstehung der Mikrophonsignale ist im oberen Teil von Figur 6 illustriert. Nach einem Startzeitpunkt (0) trifft die Oberflächenwelle zu den Zeiten t_{31,R}, t_{32,R} bzw. t_{33,R} bei den Mikrophonen ein. Die Absolutlage des Startzeitpunktes 0 ist für die weitere Messwertauswertung ohne Belang.

Nach Erfassung der Laufzeiten t_{31,R} bis t_{33,R} des Referenzdispensers wird der zu vermessende Dispenser-über die Detektorvorrichtung gefahren. Die entsprechende Position des Dispensierkopfes ist aus der vorbestimmten Einstellung seines Steuerantriebs bekannt. Der dispensierte Mikropartikel trifft bei P auf die Sensorfolie 21. Die dabei angeregte Oberflächenwelle läuft entlang der gestrichelten Linien zu den Mikrophonen. Die entsprechenden Laufzeiten sind im unteren Teil von Figur 6 illustriert. Es zeigt sich, dass die Oberflächenwelle von der Auftragsposition P wieder zuerst in das Mikrophon 31, dann jedoch zunächst in das Mikrophon 33 und schließlich in das Mikrophon 32 jeweils entsprechend nach den Zeiten t₃₁, t₃₃ bzw. t₃₂ trifft.

Die Laufzeitunterschiede t_{33,R} - t_{32,R} und t_{32,R} - t_{31,R} bzw. t₃₃ - t₃₂ und t₃₂ - t₃₁ erlauben, da sie linear mit den Laufstreckenunterschieden von den Auftreffpositionen P_{R} bzw. P zu den Mikrophonen 31 bis 33 in Zusammenhang stehen, eine unmittelbare Ableitung der Relativposition von P in Bezug auf P_{R} und unter Berücksichtigung der bekannten Positionen des Dispensierkopfes auch eine Bestimmung der Relativpositionen der zugehörigen Dispenser.

Die Figuren 7 und 8 illustrieren Auswertungsschaltungen 50 bzw. 60, die zur Partikelregistrierung bzw. -lokalisierung ausgelegt sind.

Zur ausschließlichen Partikelregistrierung ist als Auswertungsschaltung 50 (Figur 7) nur ein Meßkanal vorgesehen. Der Meßkanal 51 verläuft vom Mikrophon 31, das über den Koppelstift 34 mit der Sensorfolie 21 verbunden ist, über einen Vorverstärker 511, einen Bandpass 512 und einen Gleichrichter 513 zu einer Schwellwert- und vergleicherschaltung 514, deren Ausgang bspw. mit einer optischen Anzeige oder einem akustischen Signalgeber verbunden ist. Das Mikrophonsignal wird mit dem Verstärker 511 verstärkt, mit dem Bandpass 512 gefiltert, anschließend mit dem Gleichrichter 513 gleichgerichtet und mit der Schwellwert- und vergleicherschaltung 514 mit einem vorbestimmten Referenz-Auftreffsignal (oder Referenzsignalbereich) verglichen. Ein Mikrotropfenaufschlag löst am Ausgang der Schwellwertschaltung 514 ein Anzeigesignal aus, falls das bearbeitete Mikrophonsignal mit dem Referenz-Auftreffsignal übereinstimmt. Die Komponenten 511 bis 514 des Eingangskanal 51 sind dazu ausgelegt, dass die Anzeige störungsfrei nur bei Eintreffen einer durch einen Mikropartikelaufschlag hervorgerufenen Oberflächenwelle ein Anzeigesignal erhält. Die Schaltung 54 ist von anderen Schallquellen im Wesentlichen unbeeinflusst.

Es kann vorgesehen sein, daß die Form und/oder Amplitude des Sensorsignals mit den entsprechenden Parametern des charakteristischen Auftreffsignals verglichen werden und das Anzeigesignal entsprechend modifiziert ist. Ferner kann durch eine Klassifizierung (Vergleich mit mehreren Auftreffsignalen) die Masse des registrierten Mikropartikels aus der Amplitude des Sensorsignals ermittelt werden.

Die Laufzeitmessung erfolgt vorzugsweise durch eine Pulszählung, die im Folgenden unter Bezug auf Figur 8 erläutert wird. Figur 8 illustriert schematisch den Aufbau einer Auswertungsschaltung 60 zur Auswertung der mit der Detektorvorrichtung 10 gewonnenen Mikrophonsignale. Jedes Mikrophon ist über einen Eingangskanal mit einer Pulsgenerator- und Zählerschaltung 64 verbunden. Von den drei Eingangskanälen 61 bis 63 ist lediglich der Eingangskanal 61 im Einzelnen dargestellt.

Der Eingangskanal 61 verläuft vom Mikrophon 31, das über den Koppelstift 34 mit der Sensorfolie 21 verbunden ist, über einen Vorverstärker 611, einen Bandpass 612, einen Gleichrichter 613 und eine Schwellwertschaltung 614 , deren Ausgang mit der Pulsgenerator- und Zählerschaltung 64 verbunden ist. Das Mikrophonsignal wird nach Bearbeitung mit den Schaltungen 611, 612 und 613 (analog zu Figur 7) mit der Schwellwertschaltung 614 auf einen TTL-Pegel angepasst. Ein Mikrotropfenaufschlag löst am Ausgang der Schwellwertschaltung 614 eine positive 5V-Flanke aus. Die Schaltungen 611 bis 614 sind wiederum dazu ausgelegt, dass die Schaltung 64 störungsfrei nur bei Eintreffen einer durch einen Mikropartikelaufschlag hervorgerufenen Oberflächenwelle ein Start- oder Lesesignal erhält.

Erreicht die vom Mikropartikelaufschlag hervorgerufene Oberflächenwelle das Mikrophon 31, so wird an der Schwellwertschaltung 614 ein Signal ausgelöst, das den Pulsgeneratorteil, der Schaltung 64 verzögerungsfrei startet. Der Pulsgeneratorteil ist vorzugsweise ein quarzstabilisierter Generator mit einer Grundfrequenz im MHz-Bereich. Die Grundfrequenz beträgt bspw. 80 MHz. Bei steigender Grundfrequenz erhöht sich die Auflösung der Positionsbestimmung. Dies ergibt sich aus der folgenden Überlegung. Beim Detektor mit dem oben erläuterten Aufbau beträgt die Laufgeschwindigkeit einer Welle auf der Sensorfolie rund 20 mm in 1 ms. Die Periode bei einer gezählten Pulsfrequenz von 80 MHz entspricht rd. 12.5 ns bzw. einer Laufstrecke von rd. 230 nm. Dementsprechend liegt das Ortsauflösungsvermögen theoretisch im 200 nm - Bereich. Praktisch sind durch Zeitschwankungen in der Auswertungsschaltung jedoch nur größere Abstände auflösbar (z. B. rd. 10 µm).

Alle nachfolgend eintreffenden Signale der übrigen Mikrophone lösen ein Auslesen des aktuellen Zählerstandes aus. Bei drei Mikrophonen stehen somit zwei Zahlenwerte (Zählerstände) zur Verfügung, aus denen die o. g. Laufzeitunterschiede (siehe Figur 6) der eintreffenden Signale direkt ableitbar sind.

Die beschriebene Erfassung der Laufzeitunterschiede kann für jeden Dispenser eines Dispensierkopfes wiederholt werden, bis alle Relativpositionen relativ zum Referenzdispenser erfasst worden sind. Beim anschließenden Betrieb des Dispensierkopfes zum Dispensieren von Proben auf Substrate wird dann der Dispensierkopfantrieb jeweils unter Berücksichtigung der Relativpositionen der einzelnen Dispenser angesteuert. Hierzu ist der Dispensierkopfantrieb 65 mit der Schaltung 64 und einem Steuerrechner 66 zur Auswertung der Zählerstände und Ermittlung der Relativpositionen verbunden.

Die oben erläuterte Detektorvorrichtung kann anwendungsabhängig vielfältig modifiziert werden, ohne dass das erfindungsgemäße Prinzip der akustischen Partikelerfassung bzw. der Relativpositionsbestimmung aus der Messung von Laufzeitunterschieden verlassen wird. Es ist bspw. möglich, anstelle von drei Mikrophonen mehr Schallwandler als Sensoren vorzusehen. Die Mikrophone können anstelle von Kondensatormikrophonen auch durch andere Mikrophonbauformen gebildet werden.

Ferner kann die Schallwandleranordnung 30 gemäß der oben genannten zweiten Ausführungsform auch aus einer Kombination von Mikrophonen und Reflektorelementen am Rand der Sensorfolie 21 gebildet werden, durch die die entsprechenden Laufstrecken von den Auftreffpositionen zum Mikrophon definiert werden.

Schließlich ist der Aufbau der Detektorvorrichtung auch in Bezug auf die verwendeten Materialien, die Form und Größe der Sensorfolie modifizierbar. Beispielsweise kann die Sensorfolie aus einem piezoelektrischen Material bestehen. Die Dicke des piezoelektrischen Materials ist vorzugsweise geringer als 100 µm, z. B. 20 µm. Die Schallwandler werden durch metallische Beschichtungen gebildet, die über elektrische Anschlussleitungen mit der oben erläuterten Auswertungsschaltung verbunden sind. Die metallischen Beschichtungen sind in vorbestimmten Teilbereichen entsprechend der Positionierung der oben beschriebenen Mikrophone auf einer oder beiden Seiten der Folie angeordnet. Die Aufbringung der metallischen Beschichtungen erfolgt vorzugsweise mit einem lithographischen Verfahren. Diese Ausführungsform besitzt die folgenden speziellen Vorteile. Die Schallwandler (metallische Beschichtungen) können mit einer hohen Genauigkeit positioniert werden. Besondere Maßnahmen zur Verbesserung der Schallkupplung zwischen der Folie und dem Konverter sind nicht erforderlich. Ein erfindungsgemäßer Sensor kann mit einer hohen Reproduzierbarkeit hergestellt werden. Sensoren bzw. Sensorfolien können ohne zusätzliche Kalibrierungsschritte ausgetauscht werden. Ferner kann eine Vielzahl von Schallwandlern auf der piezoelektrischen Folie aufgebracht werden. Die Folie besteht vorzugsweise aus einer piezoelektrischen Keramik.

Die Detektorvorrichtung kann als manuell verstellbares Handgerät ausgeführt sein. Die oben beschriebene Dimensionierung ist bspw. für die Messung jeweils mit einem Dispenser ausgelegt. Bei einer größeren Sensorfolie können alle Dispenser eines Dispensierkopfes über der Sensorfolie angeordnet und die beschriebene Messung ohne jede Verfahrbewegung durchgeführt werden, wie dies im Folgenden illustriert ist.

Der Dispensierkopf wird relativ zum Schwingungstarget so ausgerichtet, daß der von jedem Dispenser des Dispensierkopfes ausgehende Mikropartikel jeweils auf der Sensorfolie auftreffen würde. Zur Positionserfassung werden aufeinanderfolgend die einzelnen Dispenser betätigt. Jeder auftreffende Mikropartikel regt auf dem Schwingungstarget eine Oberflächenwelle an, die von den Schallwandlern detektiert wird. Die weitere Messwertauswertung erfolgt nach den oben erläuterten Prinzipien.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Erfassung von Mikropartikeln, die von mindestens einem Dispenser abgegeben werden, mit den Schritten:
(a) Auslösen des Dispensers über einem Schwingungstarget (20) mit einem Sensormaterial (21), so daß mindestens ein Mikropartikel auf dem Sensormaterial (21) auftrifft und eine akustische Welle anregt,
(b) Erfassen der akustischen Welle mit mindestens einem mit dem Sensormaterial (21) verbundenen Schwingungssensor (31), der beim Eintreffen der akustischen Welle ein elektrisches Sensorsignal abgibt, wobei Laufzeitunterschiede der akustischen Welle auf mindestens drei verschieden verlaufenden Strecken im Sensormaterial zu dem mindestens einen Schwingungssensor gemessen werden, und
(c) Auswerten der Laufzeitunterschiede, um das Auftreffen des Mikropartikels zu erfassen.

2. Verfahren gemäß Anspruch 1, bei dem bei Schritt (c) ein Mikropartikel registriert wird, wenn das Sensorsignal einem charakteristischen Auftreffsignal entspricht.

3. Verfahren gemäß Anspruch 2, bei dem bei Schritt (c) die Form und/oder Amplitude des Sensorsignals mit den entsprechenden Parametern des charakteristischen Auftreffsignals verglichen werden.

4. Verfahren gemäß Anspruch 3, bei dem bei Schritt (c) die Masse des registrierten Mikropartikels aus der Amplitude des Sensorsignals ermittelt wird.

5. Verfahren gemäß Anspruch 1, bei dem die Auftreffposition des mindestens einen Mikropartikels, der von einem Dispenser abgegeben worden ist, ermittelt wird.

6. Verfahren gemäß Anspruch 5, bei dem bei Schritt (b) die Laufzeitunterschiede durch Erfassen der Oberflächenwelle mit einer Kombination aus Reflektorelementen und mindestens einem Schwingungssensor gemessen werden.

7. Verfahren gemäß Anspruch 5, bei dem bei Schritt (b) die Laufzeitunterschiede durch Erfassen der Oberflächenwelle mit mindestens drei voneinander beabstandet angeordneten Schwingungssensoren (31, 32, 33) gemessen werden.

8. Verfahren gemäß einem der Ansprüche 5 bis 7, bei dem bei Schritt (c) die Auftreffposition des Mikropartikels aus den gemessenen Laufzeitunterschieden und Referenz-Laufzeitunterschieden, die bei einer Referenzmessung mit einem Referenzdispenser gemessen werden, ermittelt wird.

9. Verfahren gemäß einem der Ansprüche 7 oder 8, bei dem die Laufzeitunterschiede gemessen werden, indem einer der Schwingungssensoren, an dem die Oberflächenwelle zuerst detektiert wird, ein Startsignal an einen Zähler gibt und die übrigen Schwingungssensoren bei Detektion der Oberflächenwelle jeweils ein Lesesignal an den Zähler geben, die Unterschiede der Zählerstände jeweils entsprechend den Start- und Lesesignalen ermittelt und daraus die Laufzeitunterschiede bestimmt werden.

10. Verfahren gemäß Anspruch 9, bei dem als Zähler ein Hochfrequenz-Zählerbaustein verwendet wird.

11. Vorrichtung zur Erfassung von mit einem Dispenser dispensierten Mikropartikeln, mit einem Schwingungstarget (20) und einer Schwingungsaufnehmeranordnung (30) mit mindestens einem Schwingungssensor (31),
**dadurch gekennzeichnet, daß**
das Schwingungstarget (20) ein flächiges Schwingungsmaterial (21) aufweist, dessen Oberseite zum Auftreffen der Mikropartikel freiliegt und mit dem der mindestens eine Schwingungssensor (31) gekoppelt ist.

12. Vorrichtung gemäß Anspruch 11, bei der das Schwingungsmaterial eine aufgespannte Sensorfolie (21) umfaßt.

13. Vorrichtung gemäß Anspruch 11 oder 12, bei der die Schwingungsaufnehmeranordnung (30) mindestens ein Mikrophon (31) und mindestens zwei mit Abstand voneinander angeordnete Reflektorelemente oder mindestens drei mit Abstand voneinander angeordnete Mikrophone (31, 32, 33) aufweist.

14. Vorrichtung gemäß Anspruch 13, bei der die Sensorfolie (21) mit einem Rahmen (22) über einem Träger (40) angebracht ist, auf dem die Mikrophone (31, 32, 33) positioniert sind.

15. Vorrichtung gemäß Anspruch 14, bei der der Rahmen (22) mit Abstandshaltern (43) höhenverstellbar über dem Träger (40) angebracht ist.

16. Vorrichtung gemäß einem der Ansprüche 13 bis 15, bei der als Mikrophone Kondensatormikrophone (31, 32, 33) vorgesehen sind, die jeweils über Koppelstifte (32) mit der Sensorfolie (41) schwingungsgekoppelt sind.

17. Vorrichtung gemäß einem der Ansprüche 13 bis 16, bei der jedes der Mikrophone (31) jeweils über einen Eingangskanal (51, 52, 53) mit einer Pulsgenerator- und Zählerschaltung (54) verbunden ist.

18. Vorrichtung gemäß Anspruch 17, bei der die Pulsgenerator- und Zählerschaltung (54) einen quarzstabilisierten Hochfrequenzgenerator aufweist.

19. Vorrichtung gemäß einem der Ansprüche 14 bis 18, bei der der Träger (40) einen Basisblock (41) und einen Sensorhalter (42) aufweist, wobei der Rahmen (22) auf dem Basisblock (41) angebracht ist und der Sensorhalter (42) mindestens eine Ausnehmung (443) aufweist, in der jeweils eines der Mikrophone (31, 32, 33) schwingungsgedämpft angebracht ist.

20. Vorrichtung gemäß Anspruch 12, bei der die Sensorfolie aus einem piezoelektrischen Material besteht und der mindestens eine Schwingungssensor durch metallische Beschichtungen auf dem piezoelektrischen Material gebildet wird.

21. Verwendung eines Verfahren oder einer Vorrichtung gemäß einem der Ansprüche 1 bis 20 zur Registrierung und/oder Lokalisierung von dispensierten Mikropartikeln, oder zur Funktionsprüfung und/oder Kalibrierung eines Dispensierkopfes.
